# EUROPEAN PATENT APPLICATION

(11) **EP 4 275 841 A1**
(43) Date of publication of application: **15.11.2023**
(21) Application number: 22305700.1
(22) Date of filing: 11.05.2022
(51) Int. Cl.: B24B 13/06, B23Q 15/28, G05B 19/18, G05B 19/404, B24B 9/14, B24B 49/18

(54) **METHOD FOR MANUFACTURING AN OPHTHALMIC DEVICE COMPRISING MACHINING**

(71) Applicant: Essilor International, 94220 Charenton-Le-Pont (FR)
(72) Inventor: MARTIN, Luc, 91470 Forges Les Bains (FR); MOINE, Jérôme, 94410 Saint Maurice (FR); CASTRO MARTINEZ, Luis Ricardo, 94100 Saint Maur Des Fosses (FR); PINAULT, Sebastien, 91310 LONGPONT SUR ORGE (FR); BESSONNET, Stephane, 94000 CRETEIL (FR)
(74) Representative: Santarelli

(57) **Abstract**

The disclosure provides a method for manufacturing an ophthalmic device, comprising machining to provide a predetermined surface on a part and which corresponds to an initial ophthalmic surface, the machining comprising:
- selecting (130) a machining tool having a cutting edge;
- selecting (140) the initial ophthalmic surface of the ophthalmic device intended to be manufactured;
- providing (150) a determined kinematics of the machining tool which is function of the initial ophthalmic surface and of a wear parameter of the cutting edge;
- machining (160) the predetermined surface according to the determined kinematics of the machining tool;
wherein the wear parameter is function of at least a distance travelled by the cutting edge for machining the predetermined surface and/or a friction time between the cutting edge and the part which is machined.

## Description

### FIELD OF THE DISCLOSURE

The disclosure relates to a method for manufacturing an ophthalmic device comprising machining, and a method for machining a predetermined surface on a part which is an ophthalmic device or a mold into which such an ophthalmic device is intended to be molded.

The disclosure also relates to a command and control unit including system elements configured to run a computer program in order to implement at least the machining of the method, and to a manufacturing system comprising such a command and control unit and configured for carrying out such a method.

The disclosure also relates to a computer program including instructions configured to implement the machining of such a method, when said computer program is run by a computer, and to a client-server communication interface for transferring to a remote computer at least manufacturing data which are determined by a computer program that implements at least some parts of such a method, when said computer program is run in a command and control unit, the remote computer implementing the other parts of such method.

### BACKGROUND ART

It is known to manufacture ophthalmic devices thanks to machining method carried out by a machining system having a machining tool.

In the known methods, the machining tool follows a predetermined kinematics which is selected depending of an ophthalmic surface which has to be manufactured in order to obtain the ophthalmic device having a predetermined optical function.

Some machining systems comprise a part counter for counting the number of ophthalmic devices which are machined, or surfaced, and are able to inform a user of the system on when the machining tool is to be replaced. The replacement of the machining tool is thus made only depending of the number of devices machined.

Some other machining systems comprise in variant or in addition of the part counter, a distance counter for counting the total distance travelled by the machining tool during steps of machining, and are also able to inform a user of the system on when the machining tool is to be replaced. The replacement of the machining tool is thus made depending of the distance travelled by the machining tool optionally in addition to the number of devices machined by this tool.

The above machining systems thus comprise counters for taking into account of potential wear of the machining tool, thus being of help for the maintenance of this tool, especially for preventive maintenance.

### SUMMARY OF THE DISCLOSURE

The disclosure is directed to a method for manufacturing an ophthalmic device comprising machining, in which wear of a machining tool is taken into account and which is easy and convenient to implement.

The disclosure accordingly provides, according to a first aspect, a method for manufacturing an ophthalmic device, comprising a machining step to provide a predetermined surface on a part and which corresponds to an initial ophthalmic surface, the machining step comprising:
- a step of selecting a machining tool having at least one cutting edge;
- a step of selecting the initial ophthalmic surface of the ophthalmic device intended to be manufactured;
- a step of providing a determined kinematics of the machining tool which is function of the initial ophthalmic surface and of a wear parameter of the cutting edge;
- a step of machining the predetermined surface according to the determined kinematics of the machining tool;
wherein the wear parameter is function of at least a distance travelled by the cutting edge for machining the predetermined surface and/or a friction time between the cutting edge and the part which is machined.

According to the disclosure, it is possible to reduce a tool wear heterogeneity on the cutting edge of the machining tool, and in particular a waviness deformation which can be generated on the cutting edge of the tool for instance if a same angle of this cutting edge is used more often than another angle, thus limiting optical power defects on the ophthalmic device.

According to the disclosure, there is thus not only an optimization of the distance traveled by the machining tool but also an optimization of the angle of the cutting edge used during machining.

In addition, in the present disclosure, there is a correlation between a local wear on the machining tool, the geometrical characteristics of the ophthalmic device to be manufactured, and in particular the curvature thereof, and also turning kinematics.

More generally, the disclosure relates to an optimization of the kinematics, also called tool path, to homogenize the tool wear and reduce discontinuity on the cutting edge thereof.

In addition, by homogenizing the wear of the machining tool, it is possible to improve the tool life management, in particular by reducing the replacements of the machining tool and/or the re-sharpening frequency.

Advantageous and convenient features of the manufacturing method are described below.

The initial ophthalmic surface may correspond to a predetermined optical function.

The part which is machined is directly the ophthalmic device or is a mold into which the ophthalmic device is intended to be molded.

The mold can be used for manufacturing semi-finished lens or finished lens.

The wear parameter is further function of at least one of a cutting depth, feed rate and rotation speed for machining the predetermined surface and/or material properties of the part to be machined.

The determined kinematics of the machining tool is defined by both a tool path and at least an angular position of the machining tool corresponding to a selected angle of the cutting edge used along the tool path.

In other words, it is possible to smooth and/or distribute the wear of the machining tool on selected angles of the cutting edge thereof.

The tool path of the determined kinematics of the machining tool comprises first instructions to move the machining tool from an edge to a center of the predetermined surface to be machined and/or to move the machining tool from the center to the edge of the predetermined surface to be machined.

The tool path of the determined kinematics of the machining tool comprises second instructions to move the machining tool in a first direction relative to a rotation axis around the part to be machined is rotated and/or to move the machining tool in a second direction opposite to the first direction relative to the rotation axis around the part to be machined is rotated.

The tool path and the angular position of the machining tool of the determined kinematics are selected in order to reduce the distance travelled by selected angles of the cutting edge for machining the predetermined surface and/or friction time between selected angles of the cutting edge and the part which is machined.

The tool path and the angular position of the machining tool of the determined kinematics are selected in order to balance the distance travelled by some selected edges along the cutting edge for machining the predetermined surface and/or friction time between selected angles along the cutting edge and the part which is machined.

The tool path and the angular position of the machining tool of the determined kinematics are selected in order to reduce the wear parameter at a center of the predetermined surface to be machined.

The initial ophthalmic surface may be an initial progressive ophthalmic surface, or a toric surface or others surfaces.

The method further comprises the step of providing a sequence of selected initial ophthalmic surfaces of the ophthalmic device intended to be manufactured and a sequence of determined kinematics of the machining tool which is function of the initial ophthalmic surfaces and of a wear parameter of the cutting edge used for machining predetermined corresponding surfaces on corresponding parts.

The part can be the ophthalmic device or a mold into which the ophthalmic device is intended to be mold. In this respect, the disclosure also provides a method for machining a predetermined surface on a part which is an ophthalmic device or a mold into which such an ophthalmic device is intended to be mold, the predetermined surface corresponding to an initial ophthalmic surface, the method comprising:
- a step of selecting a machining tool having at least one cutting edge;
- a step of selecting the initial ophthalmic surface of the ophthalmic device intended to be manufactured;
- a step of providing a determined kinematics of the machining tool which is function of the initial ophthalmic surface and of a wear parameter of the cutting edge;
- a step of machining the predetermined surface according to the determined kinematics of the machining tool;
wherein the wear parameter is function of at least a distance travelled by the cutting edge for machining the predetermined surface and/or a friction time between the cutting edge and the part which is machined.

The disclosure also provides, according to a second aspect, a command and control unit including system elements configured to run a computer program in order to implement each of the machining step of the method for manufacturing an ophthalmic device as described above.

The disclosure further provides, according to a third aspect, a manufacturing system comprising a machining tool having a cutting edge and a command and control unit as described above, the system being configured for carrying out such a machining step.

The disclosure also provides, according to a fourth aspect, a computer program including instructions configured to implement the machining step as described above, when said computer program is run by a computer.

The disclosure further provides, according to a fifth aspect, a client-server communication interface for transferring to a remote computer at least manufacturing data, such as the predetermined kinematics, which are determined by a computer program that implements at least some steps of the method for manufacturing by machining an ophthalmic device as described above, when said computer program is run in a command and control unit, the remote computer implementing the other steps of such method for manufacturing.

### BRIEF DESCRIPTION OF THE DRAWINGS

The description of the disclosure now continues with a detailed description of advantageous embodiments given hereinafter by way of nonlimiting example and with reference to the appended drawings.
Figure 1 schematically depicts a manufacturing system such as a digital surfacing machine, configured to carry out steps of a method for manufacturing a part which is an ophthalmic device or a mold into which such an ophthalmic device is intended to be mold, according to the disclosure.
Figure 2 diagrammatically shows a client-server communication interface comprising system parts configured for transferring at least one configuration parameter determined by the method according to the disclosure to a remote data processing system.
Figure 3 is a block diagram illustrating operating steps of the method for manufacturing an ophthalmic device according to the disclosure and thanks to the digital surfacing machine and/or to the client-server communication interface illustrated in Figures 1 and 2.
Figure 4 is a block diagram illustrating a machining step of Figure 3.
Figure 5 is a block diagram illustrating a step of determination of kinematics denoted in Figure 4.

### DETAILED DESCRIPTION OF EXAMPLE EMBODIMENTS

The disclosure is directed to a method for manufacturing an ophthalmic device comprising a machining step.

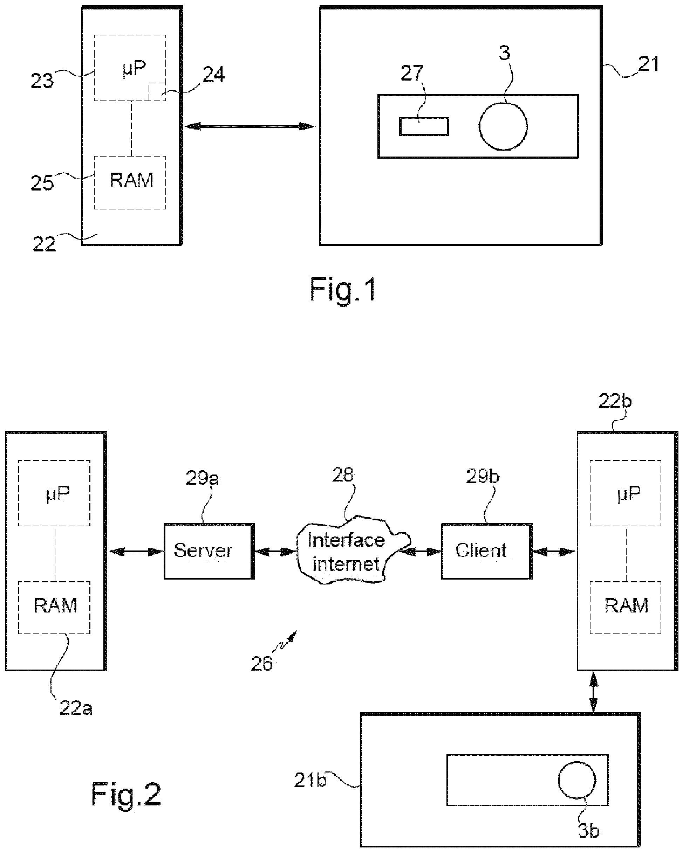

Figure 1 illustrates a manufacturing system configured to carry out at least a machining step of a predetermined surface on a part 3 which is either an ophthalmic device or a mold into which such an ophthalmic device is intended to be mold. Such a mold can be used for manufacturing semi-finished lens or finished lens.

The system comprises a manufacturing machine 21 and system parts generally formed by at least one command and control unit 22 configured to communicate with a data processing system (or control unit) of the machine 21 and configured to run a computer program having instructions configured to implement at least the machining step of the method, when said computer program is run by a computer.

The machine 21 is here a numerical-control "free-form" turning machine 1, numerical control denoting the set of equipment and software, the function of which is to give movement instructions to all the elements of the machine 1.

The machine 1 comprises a machining tool 27, for instance a moveable machining arm on which is mounted a cutting tool provided with a cutting edged, and a data processing system or a control unit (not shown) configured for controlling the tool 27.

The command and control unit 22 comprises a microprocessor 23 having a memory 24, in particular a non-volatile memory, allowing it to load and store the computer program, also called software, which when it is executed in the microprocessor 23, allows the implementation of method according to the disclosure.

This non-volatile memory 24 is for example of the ROM ("read only memory") type.

The command and control unit 22 further comprises a memory 25, in particular a volatile memory, allowing data to be stored during the execution of the software and the implementation of the method.

This volatile memory 25 is for example of the RAM or EEPROM type (respectively "random access memory" and "electrically erasable programmable read only memory").

The command and control unit may be only at least partially integrated into the machine. In other words, the control unit may be arranged in part, or in whole, outside the machine.

The command and control unit can form at least partially a part of the machine and may comprise one or a plurality of command and control modules located inside and/or outside the machine.

In the case where the part which is machined is directly the ophthalmic device, the machine 21 can also be configured for polishing the faces and/or for edging the peripheral edge in order to form the ophthalmic lens.

The command and control unit 22 is configured to command and control at least some of the steps of the manufacturing method described below.

Figure 2 shows a client-server communication interface 26 comprising for instance a so-called supplier side 29a and another, so-called client side 29b, and these two sides communicating via an internet interface 28.

The supplier side comprises a server 29a linked to a data processing system or a command and control unit 22a of the same type as that in Figure 1, this server 29a being configured to communicate with the internet interface 28.

The client side 29b is configured to communicate with the internet interface 28, and is linked to a data processing system or a command and control unit 22b of the same type as that of the supplier side.

Further, the command and control unit 22b on the client-side is linked to a manufacturing machine 21b of the same type as that in Figure 1 for manufacturing at least the first face 3b of an ophthalmic substrate.

For instance, the command and control unit 22b on the client-side is configured for receiving by a user some parameters including geometrical characteristics of an initial ophthalmic surface intended to be manufactured and wear parameters of the cutting edge of the machining tool 27.

The wear parameters can be defined by at least one of at least a distance travelled by the cutting edge for machining the predetermined surface, a friction time between the cutting edge and the part which is machined, a cutting depth, feed rate and/or rotation speed for machining the predetermined surface, and also material properties of the part to be machined.

The command and control unit 22b on the client-side, using the internet 28 and server 29a interface, sends the data received to the command and control unit 22a on the supplier-side for the determination of the manufacturing file and operational parameters.

The command and control unit 22a on the supplier-side executes the computer program that it contains in order to implement for instance the step of determination of a kinematics of the machining tool 27 which is function of the initial ophthalmic surface and of the wear parameters of the cutting edge.

Using the server 29a and the internet interface 28, the command and control unit 22a on the supplier-side sends the manufacturing file and operational parameters, in particular the kinematics of the machining tool 27, to the command and control unit 22b on the client side.

The command and control unit 22b on the client side is here configured to execute software for implementing the other steps of the method for manufacturing the part by using the manufacturing file and operational parameters, in particular the kinematics of the machining tool 27, in order to machine the predetermined surface on the part 3 which is either an ophthalmic device or a mold into which such an ophthalmic device is intended to be molded thanks to the manufacturing system 21b.

In variant, the manufacturing system can be located on the supplier side so that the command and control unit 22a on the supplier side is configured both to determine the kinematics of the machining tool 27 and to machine the predetermined surface on the part 3 which is either an ophthalmic device or a mold into which such an ophthalmic device is intended to be mold.

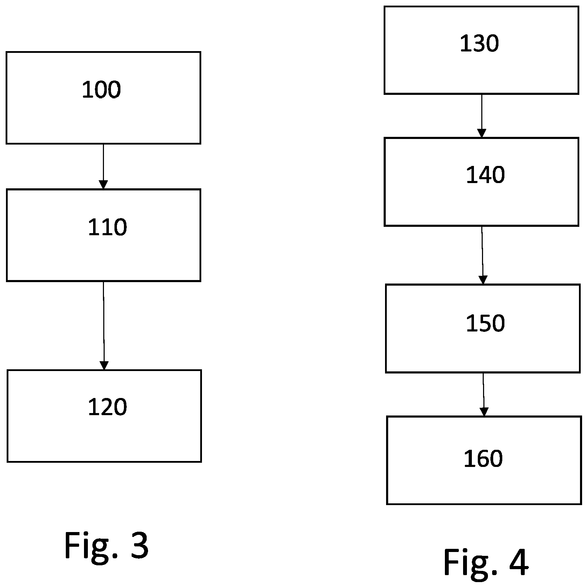

Figure 3 shows the main steps of the method for manufacturing carried out by the manufacturing system and/or client-server communication interface 26 described above, which comprises:
- a step 100 of providing, or obtaining, either an ophthalmic device or a mold into which such an ophthalmic device is intended to be mold;
- a step 110 of machining a predetermined surface on the part provided at step 100, the predetermined surface corresponding to an initial ophthalmic surface; and
- when the part is the mold into which the ophthalmic device is intended to be mold, molding the ophthalmic device in the machined mold so that to obtain the initial ophthalmic surface corresponding for instance to a predetermined optical function on the ophthalmic device.

Figure 4 shows in more detail the machining step 110, which comprises:
- a step 130 of selecting the machining tool 27 having a cutting edge;
- a step 140 of selecting the initial ophthalmic surface of the ophthalmic device intended to be manufactured, the initial ophthalmic surface corresponding for instance to a predetermined optical function;
- a step 150 of providing the determined kinematics of the machining tool 27 which is function of the initial ophthalmic surface and of the wear parameter of the cutting edge; and
- a step 160 of machining as such the predetermined surface according to the determined kinematics of the machining tool.

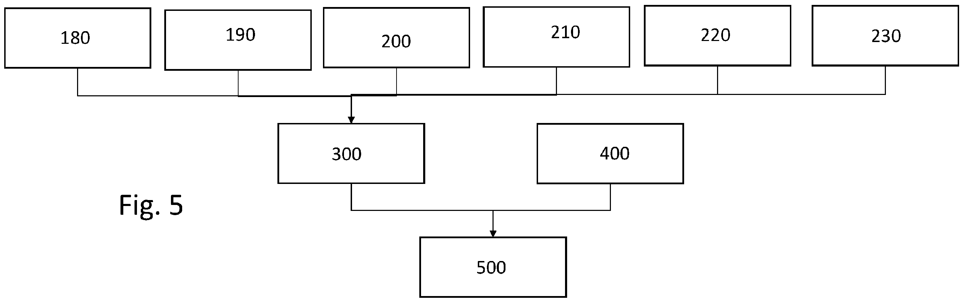

Figure 5 shows in more detail the determination of the kinematics of the machining tool.

The method may comprise a step 180 of receiving a value representative of a distance travelled by the cutting edge for machining the predetermined surface.

The method may comprise a step 190 of receiving a value representative of a friction time between the cutting edge and the part which is machined.

The method may comprise a step 200 of receiving a value representative of a cutting depth of the machining tool 27 for machining the predetermined surface.

The method may comprise a step 210 of receiving a value representative of a feed rate of the machining tool 27 for machining the predetermined surface.

The method may comprise a step 220 of receiving a value representative of a rotation speed of the part 3 for machining the predetermined surface.

The method may comprise a step 230 of receiving a value representative of material properties of the part 3 to be machined.

Then, the method may comprise the step 300 of determining wear parameters of the cutting edge of the machining tool 27 as a function of at least one of the values representative of the distance travelled by the cutting edge, the friction time between the cutting edge and the part which is machined, the cutting depth and the feed rate of the machining tool 27, and/or the rotation speed and the material properties of the part 3 to be machined.

In addition, the method may comprise the step 400 of receiving at least a value representative of the initial ophthalmic surface intended to be manufactured, which is defined for instance by geometrical characteristics and/or an optical function which corresponds for instance here to an initial progressive ophthalmic surface.

The method may further comprise a step 500 of determining the kinematics of the machining tool 27 as a function of the values representative of the wear parameters of the cutting edge of the machining tool 27 obtained in step 300 and of the initial ophthalmic surface obtained in step 400.

It is to be noted that the determined kinematics of the machining tool 27 is defined by both a tool path and at least an angular position of the machining tool 27 corresponding to a selected angle of the cutting edge used along the tool path.

The tool path of the determined kinematics of the machining tool 27 may comprise instructions, said first instructions, to move the machining tool 27 from an edge to a center of the predetermined surface to be machined.

In variant or in addition, the tool path of the determined kinematics of the machining tool 27 may comprise instructions, also said first instructions, to move the machining tool 27 from the center to the edge of the predetermined surface to be machined.

In variant or in addition, the tool path of the determined kinematics of the machining tool 27 may comprise further instructions, said second instructions, to move the machining tool 27 in a first direction relative to a rotation axis around the part 3 to be machined is rotated.

Such a first direction can be denoted X+ and defined depending on the first instructions, as corresponding to a displacement of the machining tool 27 from a first side of the edge to the center, respectively from the center to a second side of the edge, opposite to the first edge.

The first side and the second side are here defined in relation to the manufacturing system.

In variant or in addition, the tool path of the determined kinematics of the machining tool 27 may comprise further instructions, also said second instructions, to move the machining tool 27 in a second direction opposite to the first direction relative to the rotation axis around the part 3 to be machined is rotated.

Such a second direction can be denoted X- and defined depending also on the first instructions, as corresponding to a displacement of the machining tool 27 from the second side of the edge to the center, respectively from the center to the first side of the edge, opposite to the second edge.

The tool path and the angular position of the machining tool 27 of the determined kinematics may be determined and/or selected in order to reduce and/or to balance the distance travelled by selected angles of the cutting edge for machining the predetermined surface.

In variant or in addition, the tool path and the angular position of the machining tool 27 of the determined kinematics may be determined and/or selected in order to reduce and/or to balance the friction time between selected angles of the cutting edge and the part which is machined.

In variant or in addition, the tool path and the angular position of the machining tool of the determined kinematics are determined and/or selected in order to reduce the wear parameters at a center of the predetermined surface to be machined.

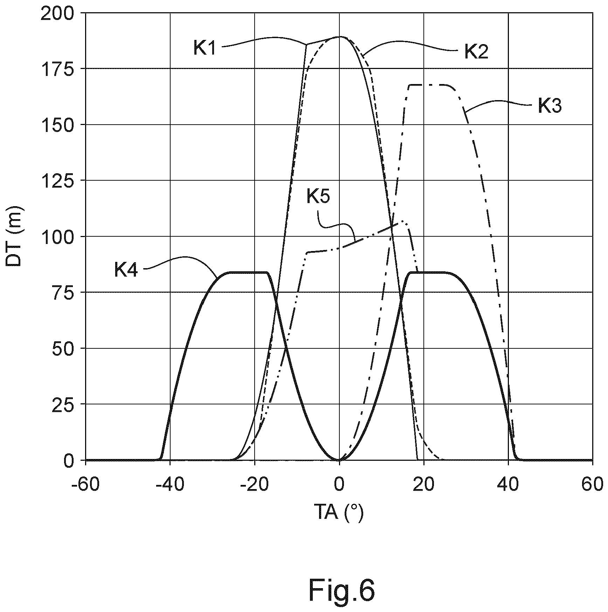

In this respect, Figure 6 illustrates the distance travelled (denoted DT, in meter) by angles of the cutting edge of a machining tool (TA in degree) , depending of the selected kinematics (denoted K1-K5) and thus of the tool path, for instance when two parts having a curvature equal to 168 mm are machined.

The selected kinematics are here K1 "X+ and edge to center", K2 "X+ and X- and center to edge", K3 "X+ and center to edge", K4 "X- and X+ and center to edge" and K5 "X+ and center to edge and edge to center".

Figure 6 shows that the range of angles of the edge of the machining tool and range of distances travelled substantially vary depending on the selected kinematics.

Based on such information, it is possible determine a hybrid kinematics, more or less complex, for machining one or a plurality of parts and taking into account the above.

For instance, a hybrid kinematics of the machining tool 27 which comprises both first instructions to move the machining tool 27 from an edge to a center of the predetermined surface to be machined and to move the machining tool 27 from the center to the edge of the predetermined surface to be machined, can both reduce the distance travelled on each point of the cutting edge and balance the distance travelled on the global cutting edge.

The manufacturing system is thus able to set out hybrid and complex kinematics.

It is to be noted that the machining tool 27 may have an opening angle enough important to cut all the curvatures range.

The method described above can be implemented in manufacturing system which is able to carry out a single point diamond turning method, for instance to focus on the whole travelled distance on the part on a single selected portion of the machining tool. Accordingly, another single portion can be selected for manufacturing a successive part.

The method may further comprise a step of providing a sequence of selected initial ophthalmic surfaces of the ophthalmic device intended to be manufactured and a sequence of determined kinematics of the machining tool which is function of the initial ophthalmic surfaces and of wear parameters of the cutting edge used for machining predetermined corresponding surfaces on corresponding parts.

This is because a large number of parts can be machined with a single machining tool 27 so that the sequence of determined kinematics can improve the improve the tool life management.

According to the above disclosure, it is possible to reduce the tool wear heterogeneity on the cutting edge of the machining tool 27, and in particular the waviness deformation which can be generated on the cutting edge of the tool for instance if the same angle of this cutting edge is used more often than another angle, thus limiting optical power defects on the ophthalmic device.

There is thus not only an optimization of the distance traveled by the machining tool but also an optimization of the angle of the cutting edge used during machining.

In addition, there is a correlation between the local wear on the machining tool 27, the geometrical characteristics of the ophthalmic device to be manufactured, and in particular the curvature thereof, and also turning kinematics.

More generally, the disclosure relates to an optimization of the kinematics, also called tool path, to homogenize the tool wear and reduce discontinuity on the cutting edge thereof.

In addition, by homogenizing the wear of the machining tool, it is possible to improve the tool life management, in particular by reducing the replacements of the machining tool and also the re-sharpening frequency.

It is also possible to smooth and/or distribute the wear of the machining tool on selected angles of the cutting edge thereof.

It should be noted more generally that the disclosure is not limited to the examples described and represented.

## Claims

1. A method for manufacturing an ophthalmic device, comprising machining (110) a predetermined surface on a part (3) and which corresponds to an initial ophthalmic surface, the machining step comprising:
- selecting (130) a machining tool (27) having at least one cutting edge;
- selecting (140) the initial ophthalmic surface of the ophthalmic device intended to be manufactured;
- providing (150) a determined kinematics of the machining tool which is function of the initial ophthalmic surface and of a wear parameter of the cutting edge;
- machining (160) the predetermined surface according to the determined kinematics of the machining tool;
wherein the wear parameter is function of at least a distance travelled by the cutting edge for machining the predetermined surface and/or a friction time between the cutting edge and the part which is machined.

2. Method according to claim 1, wherein the part (3) which is machined is directly the ophthalmic device or is a mold into which the ophthalmic device is intended to be molded.

3. Method according to one of claims 1 and 2, wherein the wear parameter is further function of at least one of a cutting depth, feed rate and rotation speed for machining the predetermined surface and/or material properties of the part (3) to be machined.

4. Method according to any one of claims 1 to 3, wherein the determined kinematics of the machining tool (27) is defined by both a tool path and at least an angular position of the machining tool corresponding to a selected angle of the cutting edge used along the tool path.

5. Method according to claim 4, wherein the tool path of the determined kinematics of the machining tool (27) comprises first instructions to move the machining tool from an edge to a center of the predetermined surface to be machined and/or to move the machining tool from the center to the edge of the predetermined surface to be machined.

6. Method according to one of claims 4 and 5, wherein the tool path of the determined kinematics of the machining tool (27) comprises second instructions to move the machining tool in a first direction relative to a rotation axis around the part to be machined is rotated and/or to move the machining tool in a second direction opposite to the first direction relative to the rotation axis around the part (3) to be machined is rotated.

7. Method according to any one of claims 4 to 6, wherein the tool path and the angular position of the machining tool (27) of the determined kinematics are selected in order to reduce the distance travelled of selected angles of the cutting edge for machining the predetermined surface and/or friction time between selected angles of the cutting edge and the part (3) which is machined.

8. Method according to any one of claims 4 to 6, wherein the tool path and the angular position of the machining tool (27) of the determined kinematics are selected in order to balance the distance travelled by some selected edges along the cutting edge for machining the predetermined surface and/or friction time between selected angles along the cutting edge and the part (3) which is machined.

9. Method according to any one of claims 4 to 8, the tool path and the angular position of the machining tool (27) of the determined kinematics are selected in order to reduce the wear parameter at a center of the predetermined surface to be machined.

10. Method according to any one of claims 1 to 9, providing a sequence of selected initial ophthalmic surfaces of the ophthalmic device intended to be manufactured and a sequence of determined kinematics of the machining tool (27) which is function of the initial ophthalmic surfaces and of a wear parameter of the cutting edge used for machining predetermined corresponding surfaces on corresponding parts.

11. A method for machining a predetermined surface on a part (3) which is an ophthalmic device or a mold into which such an ophthalmic device is intended to be molded, the method comprising:
- selecting (130) a machining tool (27) having at least one cutting edge;
- selecting (140) the initial ophthalmic surface of the ophthalmic device intended to be manufactured;
- providing (150) a determined kinematics of the machining tool which is function of the initial ophthalmic surface and of a wear parameter of the cutting edge;
- machining (160) the predetermined surface according to the determined kinematics of the machining tool;
wherein the wear parameter is function of at least a distance travelled by the cutting edge for machining the predetermined surface and/or a friction time between the cutting edge and the part which is machined.

12. A command and control unit including system elements configured to run a computer program in order to implement the machining of the method according to any one of claims 1 to 11.

13. A manufacturing system comprising a machining tool having a cutting edge and a command and control unit (22) according to claim 12, the system being configured for carrying out said machining.

14. A computer program including instructions configured to implement the machining of the method according to any one of claims 1 to 11, when said computer program is run by a computer.

15. A client-server communication interface for transferring to a remote computer at least manufacturing data, such as the predetermined kinematics, which is determined by a computer program that implements at least parts of the method according to any one of claims 1 to 11, when said computer program is run in a command and control unit, the remote computer implementing the other parts of said method for manufacturing.
